# EUROPEAN PATENT SPECIFICATION

(11) **EP 4 333 160 B1**
(45) Date of publication and mention of the grant of the patent: **16.09.2026**
(21) Application number: 22795034.2
(22) Date of filing: 29.04.2022
(51) Int. Cl.: H01M 10/613, H01M 10/653, H01M 10/6561, H01M 50/244, H01M 50/211, H01M 50/287, H01M 50/291, H01M 50/474, H01M 50/489, H01M 10/647

(54) **BATTERY PACK AND POWER CONSUMING DEVICE**
BATTERIEPACK UND STROMVERBRAUCHENDE VORRICHTUNG
BLOC-BATTERIE ET DISPOSITIF DE CONSOMMATION D'ÉNERGIE

(30) Priority: 30.04.2021 CN 202110484645
(43) Date of publication of application: 06.03.2024
(73) Proprietor: NINGDE AMPEREX TECHNOLOGY LIMITED, Ningde City, Fujian Province 352100 (CN)
(72) Inventor: XU, Weipan, Dongguan, Guangdong 523000 (CN); LIU, Xiaoping, Dongguan, Guangdong 523000 (CN); PENG, Fanggui, Dongguan, Guangdong 523000 (CN); YANG, Dian, Dongguan, Guangdong 523000 (CN)
(74) Representative: Icosa
(86) International application number: PCT/CN2022/090463
(87) International publication number: WO 2022/228565

(56) References cited:
- EP-A1- 3 726 607
- CN-A- 105 210 213
- CN-A- 113 381 094
- CN-A- 113 394 481
- CN-U- 205 248 346
- CN-U- 206 432 306
- CN-U- 206 432 306
- CN-U- 215 184 418
- JP-A- 2006 100 019

## Description

### TECHNICAL FIELD

Embodiments of this application relate to the technical field of batteries, and in particular, to a battery pack and an electrical device.

### BACKGROUND

Agricultural drones or electric tools have battery packs mounted inside for their power supply. Because the agricultural drones or the electric tools are usually charged and discharged at a high rate and have a working condition of continuous use for multiple times within a short period of time, battery cells inside the battery packs have a high temperature. If the battery packs are charged at this moment, there will be large potential safety hazards, which is very unsafe. Despite known batteries such as those disclosed in the European patent application EP3726607 which has an efficiently adjusted internal temperature, the temperature of the battery cells needs to be reduced to a charging temperature before charging the battery packs.

### SUMMARY

In a process of implementing this application, the inventor of this application finds that: agricultural drones or electric tools are charged and discharged at a high rate, after being used for multiple times, battery cells of battery packs have a high temperature, thus a user needs to wait for a long period of time for the battery cells to cool down to a charging temperature before the battery packs can be charged, and the battery packs dissipate heat poorly, which is very inconvenient and brings about a poor user experience.

In view of the foregoing problems, some embodiments of this application provide a battery pack and an electrical device, which relieves the foregoing problems that the agricultural drones or the electric tools are charged and discharged at the high rate, and after being used for multiple times, the battery cells of the battery packs have the high temperature, thus the user needs to wait for the long period of time for the battery cells to cool down to the charging temperature before the battery packs can be charged, and the battery packs dissipate the heat poorly, which is very inconvenient and brings about the poor user experience.

According to the invention, a battery pack is provided, including an upper shell, a lower shell, a battery cell assembly, a circuit board and a first component. The lower shell is provided with a battery cavity, the battery cell assembly is disposed in the battery cavity, the circuit board is connected to the battery cell assembly, the circuit board is located between the upper shell and the lower shell, the first component is provided with a first through hole running through the first component, the first through hole is located between the circuit board and the battery cell assembly, and the first through hole communicates with external air. Utilizing the first component, battery cells can cool down, facilitating that the battery cells can be charged and used for multiple times, the first through hole of the first component communicates with the external air, the first through hole can discharge heat inside the first component from the first component, and meanwhile, the user can use an external air draft device disposed at the first through hole of the first component to accelerate and improves heat dissipation of the first component.

According to the invention, the battery cell assembly includes a plurality of battery cells sequentially stacked in a first direction, each battery cell includes an electrode assembly, a battery cell shell for accommodating the electrode assembly, and tabs, one end of tab connected to the electrode assembly, another end of tab led out from the battery cell shell, and the first through hole is located between the circuit board and the tabs. Heat generated by the circuit board and the tabs can be conducted to the first component, and the heat is discharged from the first component through the first through hole in the first component.

According to the invention, the first component has a plurality of tooth pieces extending into the first through hole, the plurality of tooth pieces are disposed in the first through hole at intervals in a second direction, the plurality of tooth pieces separate the first through hole into a plurality of channels. The plurality of channels can increase the heat dissipating area of the first component and increase the contact area of the first component and the external air.

In an optional manner, the first through hole runs through the first component in the first direction or the second direction. In an optional manner, the battery pack further include a first spacer, the first spacer is disposed between the first component and the tabs of the battery cells, and the first spacer abuts against the first component and the tabs of the battery cells respectively. The first spacer can be configured to conduct heat generated by the tabs of the battery cells to the first component, serving to reduce the temperature of the tabs of the battery cells.

In an optional manner, the battery pack further includes a filler, the filler is disposed on the battery cell assembly, and the filler is connected to the first component. The filler can be configured to conduct heat generated by the battery cells to the first component, serving to reducing the temperature of battery cell bodies.

In an optional manner, the first component is further provided with a second through hole; the battery pack further includes the circuit board and a connecting line, the circuit board is disposed on a surface of the first component, the surface of the first component being a surface facing away from the lower shell, one end of the connecting line connected to the tabs of the battery cell, another end of the connecting line passes through the second through hole and connected to the circuit board. The second through hole facilitates the connecting line passes through and being connected to the circuit board, and the connecting line is configured to electrically connect the circuit board to the tabs of the battery cells.

In an optional manner, a groove is provided in a surface of the first component facing away from the lower shell, the second through hole communicate with the groove, and the circuit board is accommodated in the groove. The groove is configured to accommodate the circuit board.

In an optional manner, the battery pack includes a second spacer, the second spacer is disposed in the groove and disposed between the first component and the circuit board in a third direction, the second spacer abuts against the circuit board and the first component respectively. The second spacer is configured to conduct heat generated by the circuit board to the first component.

In an optional manner, the upper shell covers an opening of the groove, and the through hole is exposed between the upper shell and the lower shell. The upper shell covers the opening of the groove to prevent the circuit board disposed in the groove from being exposed to air and to reduce contact between the circuit board and external components, so as to avoid a short circuit of the circuit board.

In an optional manner, a material of the second spacer is an insulating heat-conducting adhesive.

In an optional manner, the first through hole runs through the first component in the first direction or the second direction.

According to another aspect of the embodiments of this application, an electrical device is provided, the electrical device includes the above-mentioned battery pack.

Some embodiments of this application have the beneficial effects that distinguishing from the case of the prior art, according some embodiments of this application, the upper shell, the lower shell, the battery cell assembly, the circuit board and the first component are disposed, the lower shell is provided with the battery cavity, the battery cell assembly is disposed in the battery cavity, the circuit board is connected to the battery cell assembly, the circuit board is located between the upper shell and the lower shell, the first component is provided with the first through hole running through the first component, the first through hole is located between the circuit board and the battery cell assembly, and the first through hole communicates with the external air. In this solution, in a using process of the battery pack, when the temperature of the battery cells and the temperature of the circuit board are high after the battery pack is used for multiple times, the battery cells and the circuit board can be cool down through the first component, so as to shorten the time of the battery cells to cool down to the charging temperature. The first through hole of the first component communicates with the external air, and the first through hole can discharge the heat inside the first component from the first component, meanwhile, the user can dispose an external air draft device at the first through hole of the first component to accelerate heat dissipation of the first component and improve the heat dissipation effect of the first component, which is more convenient.

### BRIEF DESCRIPTION OF DRAWINGS

To describe the technical solutions in the specific some embodiments of this application or the prior art more clearly, the following outlines the accompanying drawings that need to be used in the descriptions of the specific some embodiments of this application or the prior art. In all the accompanying drawings, similar elements or parts are generally identified by similar reference signs. The elements or parts in the accompanying drawings are not necessarily drawn to scale.
FIG. 1 is a schematic assembly diagram of an overall structure of a battery pack according to an embodiment of this application;
FIG. 2 is a schematic exploded diagram of the overall structure of the battery pack according to some embodiment of this application;
FIG. 3 is a sectional view of a side face of the overall structure of the battery pack according to some embodiment of this application;
FIG. 4 is a schematic structural diagram of a first component of the battery pack according to some embodiment of this application;
FIG. 5 is another schematic structural diagram of the first component of the battery pack according to some embodiment of this application;
FIG. 6 is a schematic structural diagram of a first component of a battery pack according to another embodiment of this application;
FIG. 7 is another schematic exploded diagram of the overall structure of the battery pack according to some embodiment of this application;
FIG. 8 is a schematic structural diagram of a single battery cell of the battery pack according to some embodiment of this application;
FIG. 9 is a schematic structural diagram of a filler of the battery pack according to some embodiment of this application;
FIG. 10 is another sectional view of the side face of the overall structure of the battery pack according to some embodiment of this application;
FIG. 11 is a schematic enlarged diagram of a structure at a position A in FIG. 10;
FIG. 12 is a temperature rise curve chart of battery cell bodies of a conventional structural battery pack;
FIG. 13 is a temperature rise curve chart of battery cell bodies of the battery pack according to some embodiment of this application;
FIG. 14 is a temperature rise curve chart of battery cell tabs of the conventional structural battery pack;
FIG. 15 is a temperature rise curve chart of battery cell tabs of the battery pack according to some embodiment of this application; and
FIG. 16 is a contrast diagram between temperature rise curves of BMS heating component MOS transistors of the conventional structural battery pack and the battery pack according to some embodiment of this application.

BRIEF DESCRIPTION OF DRAWINGS: 10. Lower shell; 10a. Battery cavity; 20. Battery cell assembly; 201. Battery cell; 2011. Electrode assembly; 2012. Battery cell shell; 2012a. Connecting portion; 2013. Tab; 30. First component; 301. First through hole; 301a. Channel; 302. First side plate; 3021. Tooth piece; 303. Second side plate; 3031. First fixing portion; 3031a. First fixing hole; 3032. Second fixing portion; 3032a. Second fixing hole; 304. Third side plate; 305. Fourth side plate; 3051. Third fixing portion; 3051a. Third fixing hole; 3052. Fourth fixing portion; 3052a. Fourth fixing hole; 306. Bottom plate; 3061. Second through hole; 308. Groove; 40. First spacer; 50. Filler; 501. Cavity; 501a. Third through hole; 60. Circuit board; 70. Connecting line; 80. Second spacer; and 90. Upper shell.

### DETAILED DESCRIPTION OF EMBODIMENTS

For ease of understanding this application, this application is described in more detail below in conjunction with accompanying drawings and specific some embodiments. It is thereby noted that when one component is expressed as being "fixed to" another component, it may be directly fixed to the another component, or there may also be one or more components disposed therebetween. When one component is expressed as being "connected" to another component, it may be directly connected to the another component, or there may also be one or more components disposed therebetween. The terms "vertical", "horizontal", "left", "right" and similar expressions used in the description are merely for the purpose of description.

Unless otherwise defined, all technical and scientific terms used in the description shall have the same meanings as commonly understood by a person skilled in the technical field to which this application belongs. The terms used in the description of this application are merely intended to describe the specific some embodiments rather than to limit this application. The term "and/or" used in the description includes any and all combinations of one or more of the relevant listed items.

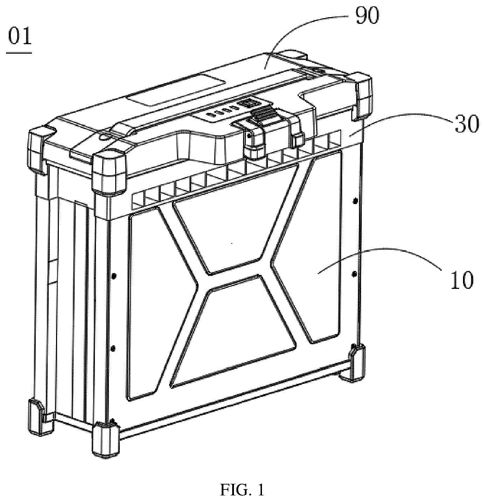

Referring to FIG. 1 to FIG. 3, a battery pack 01 includes: a lower shell 10, a battery cell assembly 20, a first component 30 and an upper shell 90.

The battery pack 01 further includes a first spacer 40, a filler 50, a circuit board 60, connecting lines 70 and a second spacer 80. The battery cell assembly 20 is disposed in the lower shell 10, and the battery cell assembly 20 partially runs through the filler 50. The first spacer 40 is disposed on the filler 50, and the first spacer 40 abuts against a part of the battery cell assembly 20 passes through the filler 50. The first component 30 is fixed to the filler 50, and the first component 30 is located on the first spacer 40. The second spacer 80 is disposed on the first component 30, and the circuit board 60 is disposed on the second spacer 80. The connecting lines 70 are electrically connected to the battery cell assembly 20 and the circuit board 60, and the upper cover 90 covers the first component 30. The first spacer 40 and the second spacer 80 have heat conducting properties for conducting heat of the circuit board 60 and the battery cell assembly 20 to the first component 30, and the first component 30 is exposed between the lower shell 10 and the upper shell 90 and can directly conduct heat exchanging with the outside, which is conducive to improving the heat conducting effect of the first component 30 on the circuit board and the battery cell assembly 20.

In order to better describe the structure of the battery pack 01, the structure of the battery pack 01 will be described in conjunction with X, Y and X coordinate axes, where the X, Y and Z coordinate axes are pairwise perpendicular.

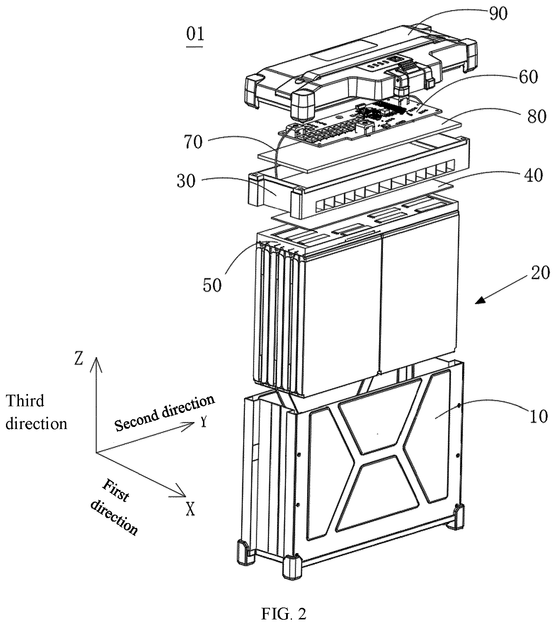

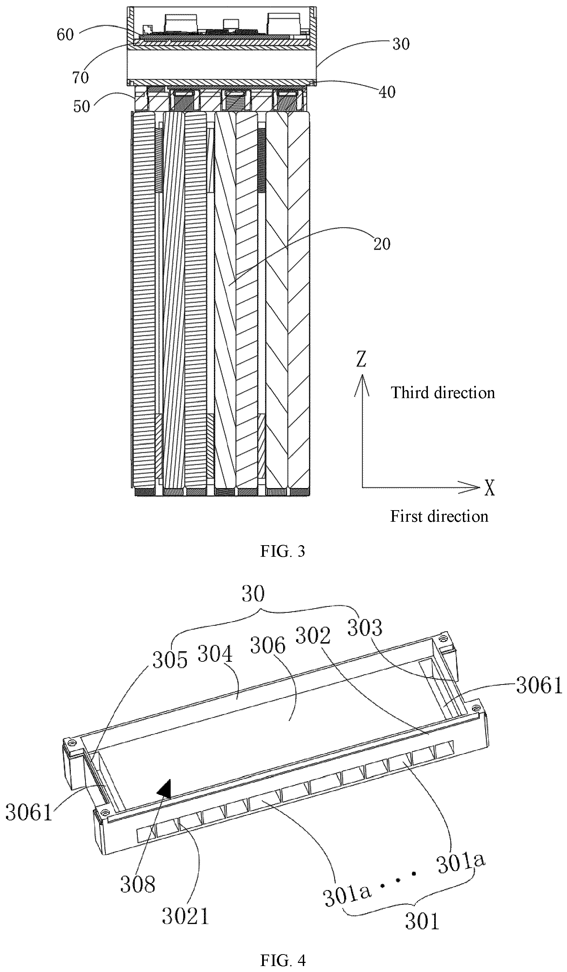

For the foregoing first component 30, as shown in FIG. 2 and FIG. 4, the first component 30 includes a first side plate 302, a second side plate 303, a third side plate 304, a fourth side plate 305 and a bottom plate 306. The first side plate 302, the second side plate 303, the third side plate 304 and the fourth side plate 305 are sequentially connected end to end and surround the bottom plate 306. The first side plate 302 and the third side plate 304 are oppositely disposed, and the second side plate 303 and the fourth side plate 305 are oppositely disposed. A groove 308 is further jointly enclosed by the first side plate 302, the second side plate 303, the third side plate 304, the fourth side plate 305 and the bottom plate 306. The groove 308 is configured to accommodate the circuit board 60 and the second spacer 80. The first component 30 is further provided with second through holes 3061 running through the bottom plate 306, and the second through holes 3061 are disposed at two ends of the bottom plate 306, the second through holes 3061 are disposed adjacent to the second side plate 303 and the fourth side plate 305 respectively. The second through holes 3061 communicate with the groove 308, and the second through holes 3061 are configured to allow the connecting lines 70 to run through. A material for making the first component 30 is metal, such as an aluminum alloy, a copper alloy or the like.

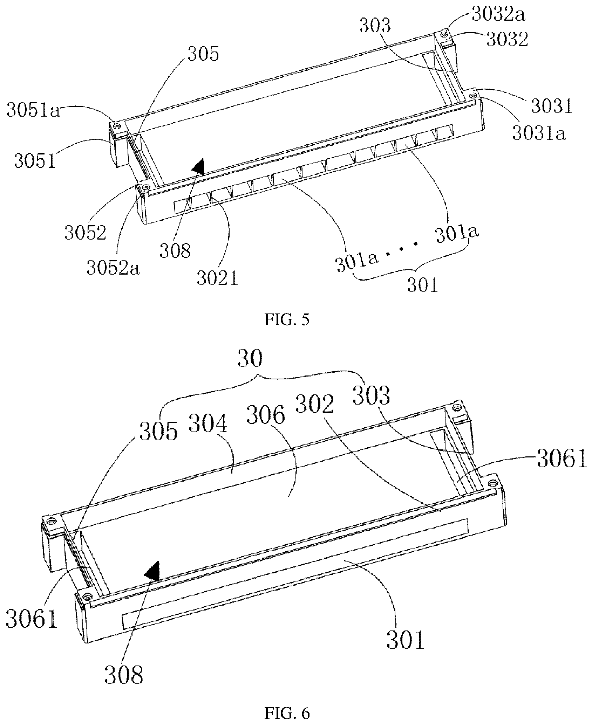

As shown in FIG. 5, the second side plate 303 is provided with a first fixing portion 3031 and a second fixing portion 3032 in an extending manner, and the first fixing portion 3031 and the second fixing portion 3032 are disposed in a spaced manner. One end of the first fixing portion 3031 is provided with a first fixing hole 3031a, one end of the second fixing portion 3032 is provided with a second fixing hole 3032a, and the first fixing hole 3031a and the second fixing hole 3032a are configured to be fixed to one end of the upper shell 90. The fourth side plate 305 is provided with a third fixing portion 3051 and a fourth fixing portion 3052 in an extending manner, and the third fixing portion 3051 and the fourth fixing portion 3052 are disposed in a spaced manner. One end of the third fixing portion 3051 is provided with a third fixing hole 3051a, one end of the fourth fixing portion 3052 is provided with a fourth fixing hole 3052a, and the third fixing hole 3051a and the fourth fixing hole 3052a are configured to be fixed to the another end of the upper shell 90.

The first component 30 is further provided with a first through hole 301 running through the first side plate 302, and the third side plate 304. The first side plate 302 has a plurality of tooth pieces 3021 extending into the first through hole 301, the plurality of toothed pieces 3021 are disposed in the first through hole 301 at intervals in a second direction, the plurality of tooth pieces 3021 separate the first through hole 301 into a plurality of channels 301a, and the second direction is perpendicular to the first direction. The first through hole 301 runs through the first component 30 in the first direction or the second direction. The first through hole 301 is exposed between the lower shell 10 and the upper shell 90. In other words, the plurality of channels 301a are exposed between the lower shell 10 and the upper shell 90. The plurality of channels 301a are configured to allow an external airflow to flow through, and the airflow flowing through the plurality of channels 301a can bring away heat of the first component 30, which improves the efficiency of heat exchange between the first component 30 and the outside, thereby improving the heat dissipating effect. The tooth pieces 3021 can increase the heat dissipating area of the first component 30 and increase the contact area of the first component 30 and the air, thereby improving the heat dissipating efficiency of the first component 30.

In order to further improve the heat dissipating effect, in some embodiments, the battery pack 01 can further include a fan (not shown in the figure). The fan is mounted in the first component 30, and an air outlet of the fan is aligned with an end opening of one end of each of the plurality of channels 301a. The fan blows air to the plurality of channels 301a to increase the flowing speed of the airflow in the plurality of channels 301a, thereby improving the heat dissipating efficiency.

It can be understood that in some other embodiments, it is also possible to provide the first through hole 301 only and not dispose the tooth pieces 3021, and the first through hole 301 allows the external air flow to flow through, as shown in FIG. 6. In addition, there is no limitation on the number of the first through hole 301. For example, one of the first through holes 301 runs through the first side plate 302 and the third side plate 304, the other one of the first through holes 301 can run through the second side plate 303 and the fourth side plate 305, and the two first through holes 301 communicate with each other, which can accelerate flowing of an airflow inside the first component 30 and improve the heat dissipating effect of the first component 30. Meanwhile, the first through hole 301 is not limited to be provided to run through the first side plate 302 and the third side plate 304 only, that is, the first through hole 301 runs through the first component 30 in the first direction; and the first through hole 301 can also be provided to run through the second side plate 303 and the fourth side plate 305 only, that is, the first through hole 301 runs through the first component 30 in the second direction.

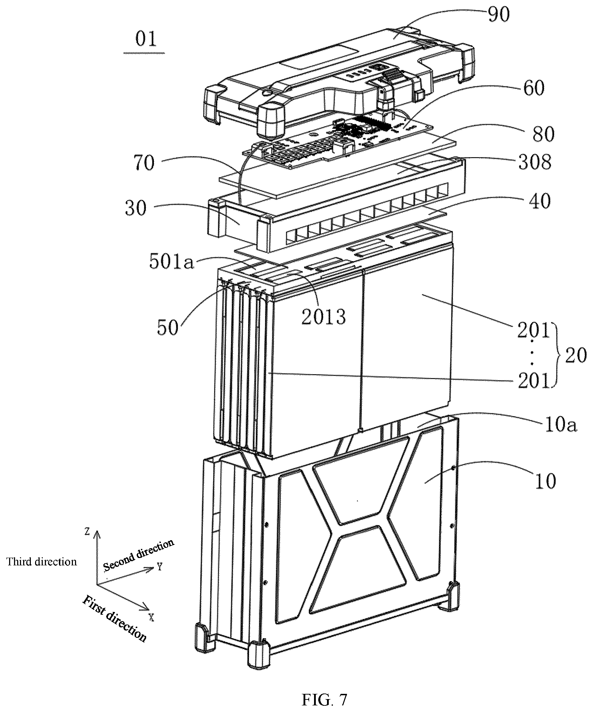

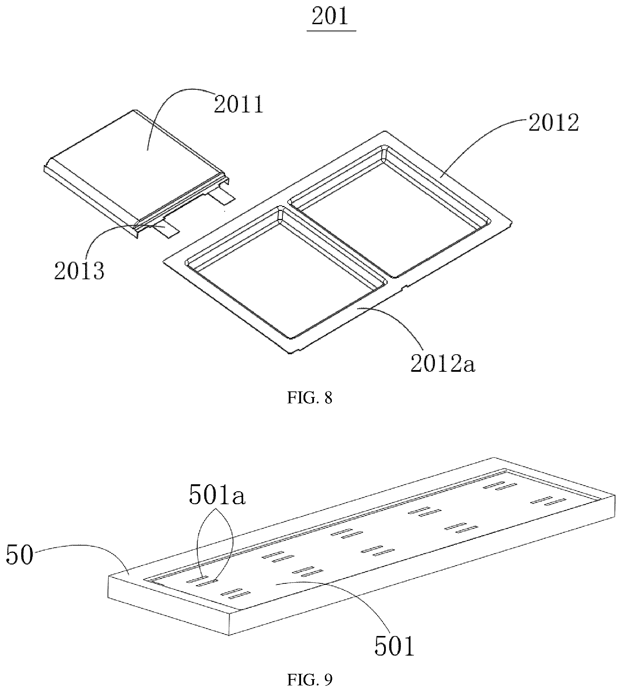

For the foregoing battery cell assembly 20, as shown in FIG. 7 and FIG. 8, The battery cell assembly 20 includes a plurality of battery cells 201 sequentially stacked in the first direction, and the battery cells 201 are configured to be electrically connected to the circuit board 60.

Each battery cell 201 includes an electrode assembly 2011, a battery cell shell 2012 for accommodating the electrode assembly 2011, and tabs 2013. One end of tab 2013 connected to the electrode assembly 2011, another end of tab 2013 led out from the battery cell shell 2012. The battery cell shells 2012 are configured to seal the electrode assemblies 2011 to limit external water vapor from entering the battery cell shells 2012. The tabs 2013 include positive tabs and negative tabs, and the plurality of battery cells 201 are connected through the positive tabs and the negative tabs.

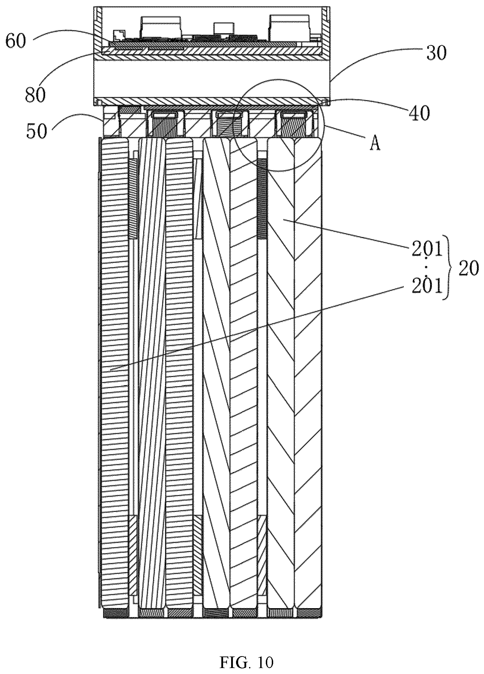

For the foregoing filler 50, as shown in FIG. 7, FIG. 9 and FIG. 10, the filler 50 is provided with a cavity 501 and a plurality of third through holes 501a. The plurality of third through holes 501a communicate with the cavity 501. The filler 50 is disposed on the battery cell assembly 20, the positive tab and the negative tab of one of the battery cells 201 pass through the two corresponding third through holes 501a respectively and are inserted into the cavity 501, and the tabs 2013 of the plurality of battery cells 201 are connected in a cavity body.

It is worth noting that in some embodiments, the filler 50 is formed after a heat-conducting adhesive poured on top seals of the battery cells 201 is solidified, and the filler is bonded and fixed to the first spacer 40 and the first component 30. In addition, the filler 50 has a heat conducting property, thus the filler 50 can be configured to conduct heat generated by the battery cells 201 to the first component 30 and then dissipate the heat to the outside through the first component 30, thereby achieving the purpose of reducing the temperature of the battery cells 201. Certainly, a material for making the filler 50 is not limited to the foregoing heat-conducting adhesive and can also be others, such as a heat-conducting gel, as long as the filler 50 meets heat conductivity of the battery cells 201 and has an insulating effect.

For the foregoing first spacer 40 and second spacer 80, as shown in FIG. 7, FIG. 10 and FIG. 11, the first spacer 40 is disposed between the first component 30 and the tabs 2013 of the battery cells 201, and the first spacer 40 abuts against the first component 30 and the tabs 2013 of the battery cells 201 respectively. The first spacer 40 has the heat conducting property. Heat generated by the tabs 2013 of the battery cells 201 is conducted to the first component 30 through the first spacer 40 and then dissipated to the outside through the first component 30, thereby reducing the temperature of the tabs 2013 of the battery cells.

In some embodiments, the first spacer 40 is an insulating heat-conducting spacer. The insulating heat-conducting spacer not only plays a role of insulating to prevent a short circuit of the battery cells 201 caused by the first component 30 making contact with the battery cells 201, but also can improve the property of heat conduction between the tabs 2013 of the battery cells 201 and the first component 30, improving the heat dissipating effect of the first component 301 on the tabs 2013 of the battery cells 201.

The second spacer 80 is disposed in the groove 308, the second spacer 80 is disposed between the bottom plate 306 and the circuit board 60 in a third direction, and the second spacer 80 abuts against the circuit board 60 and the bottom plate 306 respectively. The second spacer 80 has the heat conducting property, and the second spacer 80 is configured to conduct heat generated by the circuit board 60 to the first component 30, and then the first component 30 dissipate the heat to the outside, thereby achieving the purpose of reducing the temperature of the circuit board 60.

In some embodiments, the second spacer 80 is made of an insulating heat-conducting adhesive. The insulating heat-conducting adhesive can conduct the heat generated by the circuit board 60 to the first component 30, and meanwhile, it can further play a role of insulating to prevent a short circuit of the circuit board 60 caused by direct contact between the circuit board 60 and the first component 30.

It is hereby noted that the first direction refers to a direction along an X axis. Optionally, the first direction is a thickness direction of the battery cells 201. The second direction refers to a direction along a Y axis. The third direction refers to a direction along a Z axis.

For the foregoing circuit board 60 and connecting lines 70, as shown in FIG. 7, the circuit board 60 is accommodated in the groove 308, the circuit board 60 is dispose on a surface of the first component 30 facing away from the lower shell 10. One end of the connecting lines 70 connected to the tabs 2013 of the corresponding battery cell 201, another end of the connecting lines 70 passes through the corresponding second through hole 3061 and connected to the circuit board 60, thus achieving electrical connection between the circuit board 60 and the battery cells 201. In some embodiments, the circuit board 60 is Battery Management System (BMS) plate, and the BMS plate is configured to control charge and discharge of the battery cell assembly 20.

For the foregoing lower shell 10 and upper shell 90, as shown in FIG. 7, the lower shell 10 is provided with a battery cavity 10a, and the battery cavity 10a is configured to accommodate the battery cell assembly 20. The upper shell 90 is connected to the first component 30, and the upper shell 90 covers an opening of the groove 308. The upper shell 90 shields the opening of the groove 308 to prevent the circuit board 60 disposed in the groove 308 from being exposed to the air and to reduce contact between the circuit board 60 and external components, so as to avoid a short circuit of the circuit board 60, and the upper shell 90 plays an isolating and protecting role for the circuit board 60. The lower shell 10 can play a protecting role for the battery cell assembly 20 accommodated in the battery cavity 10a to limit the external components from damaging the battery cell assembly 20. It can be understood that the upper shell 90 is fixed to the first component 30 in a manner of screwing, welding, etc.

An assembly process of the battery pack 01 includes the following steps. Placing the battery cell assembly 20 in the battery cavity 10a of the lower shell 10, and spacing the battery cell assembly 20 and an opening of the battery cavity 10a by a preset space; then disposing the first spacer 40 abutting against the tabs 2013 of the battery cells 201; then pouring a heat-conducting adhesive and letting the heat-conducting adhesive fill the preset space; bonding and fixing the heat-conducting adhesive to the first spacer 40 and the first component 30; then disposing the second spacer 80 in the first component 30 and fixing the second spacer to the first component 30; disposing the circuit board 60 on the second spacer 80 and fixing the circuit board to the second spacer 80; and finally, fixing the upper shell 90 to the first component 30, where the heat-conducting adhesive forms the filler 50 after solidified.

In order to better describe the technical effects that can be achieved by the first component adopted in the technical solutions of this application, this application further provides a related contrast test between a conventional structural battery pack (without the first component) and the battery pack of this application. A specific test process is as follows:

A thermal simulation analysis means is adopted for simulating temperature distributions of the battery pack of this application and the conventional structural battery pack under the same working condition.

Test materials: the conventional structural battery pack and the battery pack of this application, where each of the two battery packs being provided with 14 battery cells.

Test conditions: at a simulation working condition of 35°C, the battery packs being charged at a rate of 5C, and discharged under a working condition of an actual current of the user, and charging and discharging being continuously cycled for eight cycles at an external ambient air speed of 2m/swithout resting.

Results of thermal simulation analysis are shown in Table 1 below.

**Table 1**

| | Conventional battery pack structure | Battery pack structure of this application |
|---|---|---|
| Maximum temperature of battery cell bodies | 95.8°C | 75.7°C |
| Temperature difference of battery cells | 13.2°C | 5.5°C |
| Maximum temperature of tabs of battery cells | 101.1°C | 66.5°C |
| Temperature difference of tabs of battery cells | 9.4°C | 2.3°C |
| Temperature of BMS plate heating component (MOS) | 70°C | 53.7°C |

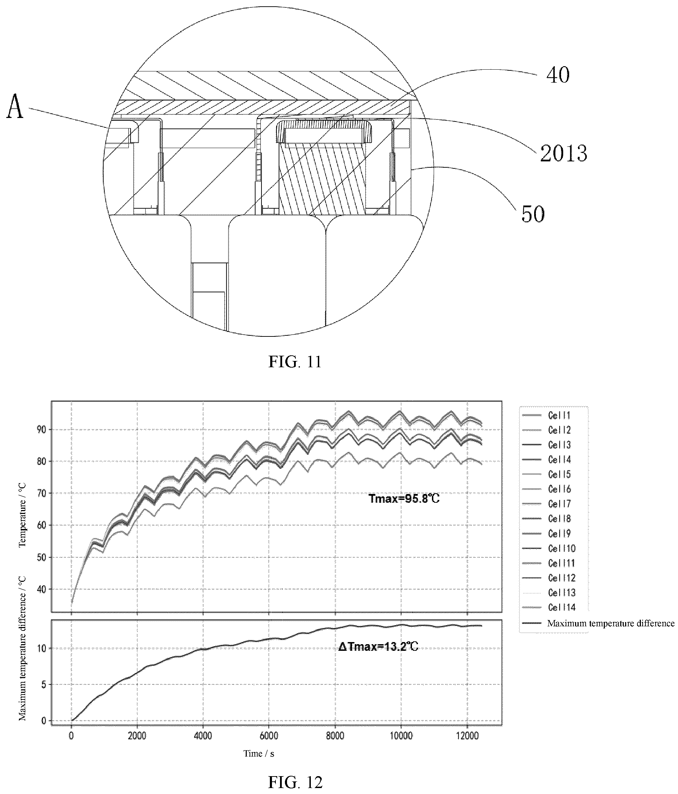

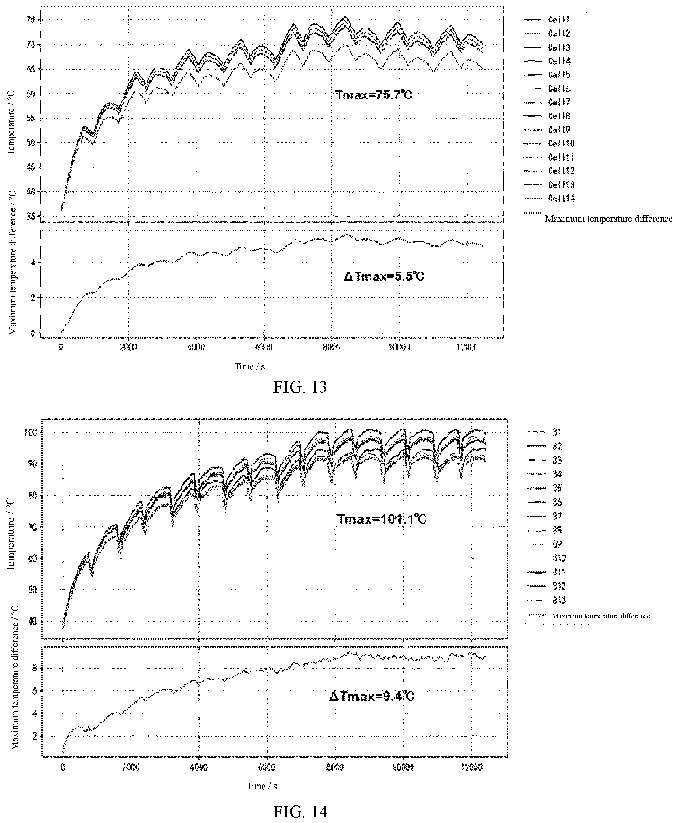

As can be seen from a temperature rise curve of battery bodies of the conventional structural battery pack in FIG. 12, a maximum temperature of the battery cell bodies of the conventional structural battery pack is stabilized at 95.8°C, the temperature is high, and a maximum temperature difference of the battery cells is 13.2°C. However, as can be seen from a temperature rise curve of battery bodies of the battery pack of this application in FIG. 13, a maximum temperature of the battery cell bodies of the battery pack of this application is stabilized at 75.7°C, and a maximum temperature difference of the battery cells is 5.5°C. Compared with a temperature rise of the battery cell bodies of the conventional structural battery pack, the maximum temperature of the battery cell bodies of the battery pack of this application is reduced by 20.1°C, and the maximum temperature difference of the battery cells is reduced by 7.7°C. It is thus shown that the battery pack adopting a heat dissipating structure of this application can greatly reduce the temperature rise of the battery cells and improve the maximum temperature difference of the battery cells.

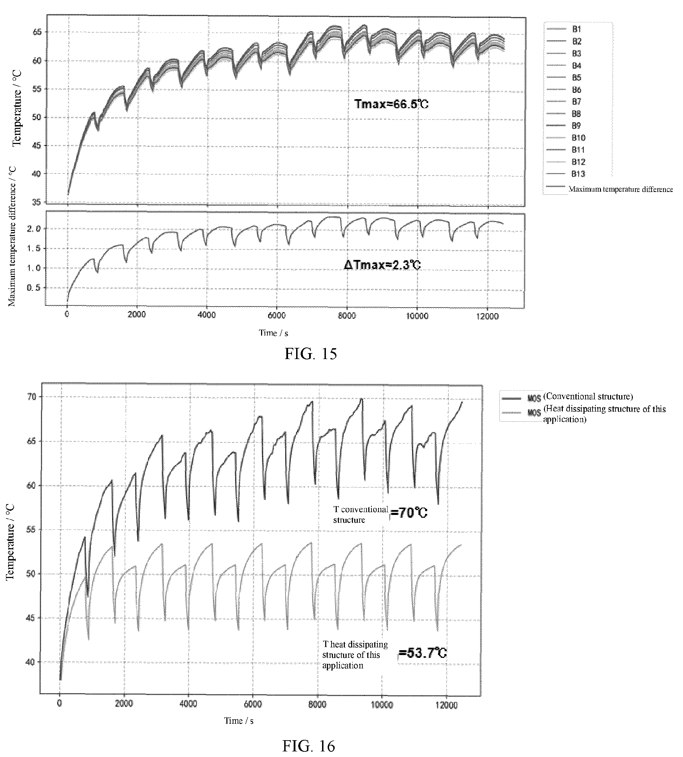

As can be seen from a temperature rise curve of the tabs of the battery cells of the conventional structural battery pack in FIG. 14, a maximum temperature of the tabs of the battery cells of the conventional structural battery pack is stabilized at 101°C, and a maximum temperature difference of the tabs of the battery cells is 9.4°C. However, as can be seen from a temperature rise curve of the tabs of the battery cells of the battery pack of this application in FIG. 15, a maximum temperature of the tabs of the battery cells of this application is stabilized at 75.7°C, and a maximum temperature difference of the tabs of the battery cells is 2.3°C. Compared with a temperature rise of the tabs of the battery cells of the conventional structural battery pack, the maximum temperature of the tabs of the battery cells of the battery pack of this application is reduced by 34.6°C, and the maximum temperature difference of the tabs of the battery cells is reduced by 7.1°C. It is thus shown that the battery pack adopting the heat dissipating structure of this application can greatly reduce the temperature rise of the tabs of the battery cells and improve the maximum temperature difference of the tabs of the battery cells.

As can be seen from a temperature rise curve of a BMS heating component MOS transistor on the conventional structural battery pack in FIG. 16, a maximum temperature of the BMS heating component MOS transistor of the conventional structural battery pack is 70°C. However, as can be seen from a temperature rise curve of a BMS heating component MOS transistor on the battery pack of this application in FIG. 16, a maximum temperature of the BMS heating component MOS transistor of the battery pack of this application is 53.7°C. Compared with a temperature rise of the BMS heating component MOS transistor of the conventional structural battery pack, the maximum temperature of the BMS heating component MOS transistor of the battery pack of this application is reduced by 16.3°C. It is thus shown that the battery pack adopting the heat dissipating structure of this application can greatly reduce the temperature of the BMS heating component.

To sum up, it can be seen that the battery pack adopting the heat dissipating structure of this application has a better heat dissipating effect than the conventional structural battery pack. Not only can the battery cell bodies, the tabs of the battery cells, and the BMS heating component cool down, but also it solves the problem of an excessively high temperature rise of the battery cells in a case that the battery pack is continuously charged and discharged for multiple cycles without resting, so that the battery pack can be continuously charged and discharged for multiple cycles without resting, which is more convenient.

In some embodiments of this application, the upper shell 90, the lower shell 10, the battery cell assembly 20, the circuit board 60 and the first component 30 are disposed, the lower shell 10 is provided with the battery cavity 10a, the battery cell assembly 20 is disposed in the battery cavity 10a, the circuit board 60 is connected to the battery cell assembly 20, the circuit board 60 is located between the upper shell 90 and the lower shell 10, the first component 30 is provided with the first through hole 301 running through the first component 30, the first through hole 301 is located between the circuit board 60 and the battery cell assembly 20, and the first through hole 301 communicates with the external air, such that in a using process of the battery pack 01, when the temperature of the battery cells 201 and the temperature of the circuit board 60 are high after the battery pack 01 is used for multiple times, the battery cells 201 and the circuit board 60 can cool down through the first component 30 to shorten the time of the battery cells 201 to cool down to the charging temperature, the first through hole 301 of the first component 30 communicates with the external air, the first through hole 301 can discharge the heat inside the first component 30 from the first component 30, and meanwhile, the user can dispose an external air draft device at the first through hole 301 of the first component 30 to accelerate heat dissipation of the first component 30 and improve the heat dissipation effect of the first component 30, which is more convenient.

This application further provides an embodiment of an electrical device. The electrical device includes the above battery pack, and the electrical device includes, but is not limited to, an agricultural drone, a two-wheeled electric vehicle, an energy storage device, a handheld electric tool, etc. For the function and structure of the battery pack 01, reference can be made to the foregoing some embodiments, which will not be described in detail herein.

What is described above is merely some embodiments of this application and does not thereby limit the patent scope of this application.

## Claims

1. A battery pack (01), comprising:
an upper shell (90);
a lower shell (10) provided with a battery cavity (10a);
a battery cell assembly (20) provided in the battery cavity (10a);
a circuit board (60) connected to the battery cell assembly (20), and the circuit board (60) is located between the upper shell (90) and the lower shell (10);
wherein
the battery pack (01) further comprises a first component (30), the first component (30) is provided with a first through hole (301) running through the first component (30), the first through hole (301) is located between the circuit board (60) and the battery cell assembly (20), and the first through hole (301) communicates with external air;
wherein the battery cell assembly (20) comprises a plurality of battery cells (201) sequentially stacked in a first direction; each battery cell (201) comprises an electrode assembly (2011), a battery cell shell (2012) for accommodating the electrode assembly (2011), and tabs (2013); one end of each tab (2013) connected to the electrode assembly (2011), another end of the each tab (2013) led out from the battery cell shell (2012), the first through hole (301) being located between the circuit board (60) and the tabs (2013);
**characterized in that** the first component (30) has a plurality of tooth pieces (3021) extending into the first through hole (301), the plurality of tooth pieces (3021) are disposed in the first through hole (301) at intervals in a second direction, the plurality of tooth pieces (3021) separate the first through hole (301) into a plurality of channels (301a), and the second direction is perpendicular to the first direction.

2. The battery pack (01) according to claim 1, wherein the battery pack (01) further comprising a first spacer (40), the first spacer (40) being disposed between the first component (30) and the tabs (2013) of the battery cells (201), and the first spacer (40) abutting against the first component (30) and the tabs (2013) of the battery cells (201) respectively.

3. The battery pack (01) according to claim 2, wherein the battery pack (01) further comprising a filler (50), the filler (50) being disposed on the battery cell assembly (20), and the filler (50) being connected to the first component (30).

4. The battery pack (01) according to any one of claims 1 to 3, wherein the first component (30) is further provided with a second through hole (3061); and
the circuit board (60) is disposed on a surface of the first component (30), the surface of the first component (30) being a surface facing away from the lower shell (10);
the battery pack (01) further comprises a connecting line (70), one end of the connecting line (70) is connected to the tabs (2013) of the battery cell (201), another end the connecting line (70) passes through the second through hole (3061) and is connected to the circuit board (60).

5. The battery pack (01) according to claim 4, wherein a groove (308) is provided on the first component (30), the second through hole (3061) communicate with the groove (308), and the circuit board (60) is accommodated in the groove (308).

6. The battery pack (01) according to claim 5, wherein the battery pack (01) further comprising a second spacer (80), the second spacer (80) being disposed in the groove (308), and the second spacer (80) is disposed between the first component (30) and the circuit board (60) in a third direction, the third direction being perpendicular to both the first direction and the second direction;
the second spacer (80) is abutted against the circuit board (60), and the second spacer (80) is abutted against a part of the first component (30).

7. The battery pack (01) according to claim 6, wherein a material of the second spacer (80) is an insulating heat-conducting adhesive.

8. The battery pack (01) according to claim 5, wherein the upper shell (90) covers an opening of the groove (308), and the first through hole (301) is exposed between the upper shell (90) and the lower shell (10).

9. The battery pack (01) according to claim 3, wherein the filler (50) is a solidified heat-conducting adhesive on top seals of the battery cells (201), the filler (50) is bonded and fixed to the first spacer (40) and the first component (30).

10. The battery pack (01) according to claim 2, wherein the first spacer (40) is an insulating heat-conducting spacer.

11. The battery pack (01) according to claim any one of claims 6 to 8, wherein the first component (30) comprises a first side plate (302), a second side plate (303), a third side plate (304), a fourth side plate (305) and a bottom plate (306);
the groove (308) is jointly enclosed by the first side plate (302), the second side plate (303), the third side plate (304), the fourth side plate (305) and the bottom plate (306).

12. The battery pack (01) according to any one of claims 1 to 11, wherein the first through hole (301) runs through the first component (30) in the first direction or the second direction.

13. An electrical device, wherein comprising the battery pack (01) according to any one of claims 1 to 12.

## Patentansprüche

1. Batteriepack (01), umfassend:
ein oberes Gehäuse (90);
ein unteres Gehäuse (10), das mit einem Batteriefach (10a) versehen ist;
eine Batteriezellenanordnung (20), die in dem Batteriefach (10a) vorgesehen ist;
eine Leiterplatte (60), die mit der Batteriezellenanordnung (20) verbunden ist, wobei sich die Leiterplatte (60) zwischen dem oberen Gehäuse (90) und dem unteren Gehäuse (10) befindet;
wobei
der Batteriepack (01) ferner ein erstes Bauteil (30) umfasst, wobei das erste Bauteil (30) mit einem ersten Durchgangsloch (301) versehen ist, das sich durch das erste Bauteil (30) erstreckt, wobei sich das erste Durchgangsloch (301) zwischen der Leiterplatte (60) und der Batteriezellenanordnung (20) befindet und das erste Durchgangsloch (301) mit der Außenluft in Verbindung steht;
wobei die Batteriezellenanordnung (20) eine Vielzahl von Batteriezellen (201) umfasst, die in einer ersten Richtung nacheinander gestapelt sind; wobei jede Batteriezelle (201) eine Elektrodenanordnung (2011), ein Batteriezellengehäuse (2012) zur Aufnahme der Elektrodenanordnung (2011) und Laschen (2013) umfasst; wobei ein Ende jeder Lasche (2013) mit der Elektrodenanordnung (2011) verbunden ist und das andere Ende jeder Lasche (2013) aus dem Batteriezellengehäuse (2012) herausgeführt ist, wobei sich das erste Durchgangsloch (301) zwischen der Leiterplatte (60) und den Laschen (2013) befindet;
**dadurch gekennzeichnet, dass** das erste Bauteil (30) eine Vielzahl von Zähnen (3021) aufweist, die sich in das erste Durchgangsloch (301) hinein erstrecken, wobei die Vielzahl von Zähnen (3021) in Abständen in einer zweiten Richtung in dem ersten Durchgangsloch (301) angeordnet ist, wobei die Vielzahl von Zähnen (3021) das erste Durchgangsloch (301) in eine Vielzahl von Kanälen (301a) unterteilt und die zweite Richtung senkrecht zur ersten Richtung verläuft.

2. Batteriepack (01) nach Anspruch 1, wobei der Batteriepack (01) ferner einen ersten Abstandshalter (40) umfasst, wobei der erste Abstandshalter (40) zwischen dem ersten Bauteil (30) und den Laschen (2013) der Batteriezellen (201) angeordnet ist und der erste Abstandshalter (40) jeweils an dem ersten Bauteil (30) und den Laschen (2013) der Batteriezellen (201) anliegt.

3. Batteriepack (01) nach Anspruch 2, wobei der Batteriepack (01) ferner einen Füllkörper (50) umfasst, wobei der Füllkörper (50) auf der Batteriezellenanordnung (20) angeordnet ist und der Füllkörper (50) mit dem ersten Bauteil (30) verbunden ist.

4. Batteriepack (01) nach einem der Ansprüche 1 bis 3, wobei das erste Bauteil (30) ferner mit einem zweiten Durchgangsloch (3061) versehen ist; und
die Leiterplatte (60) auf einer Oberfläche des ersten Bauteils (30) angeordnet ist, wobei die Oberfläche des ersten Bauteils (30) eine von dem unteren Gehäuse (10) abgewandte Oberfläche ist;
wobei der Batteriepack (01) ferner eine Verbindungsleitung (70) umfasst, wobei ein Ende der Verbindungsleitung (70) mit den Laschen (2013) der Batteriezelle (201) verbunden ist und das andere Ende der Verbindungsleitung (70) durch das zweite Durchgangsloch (3061) hindurchgeht und mit der Leiterplatte (60) verbunden ist.

5. Batteriepack (01) nach Anspruch 4, wobei an dem ersten Bauteil (30) eine Nut (308) vorgesehen ist, wobei das zweite Durchgangsloch (3061) mit der Nut (308) in Verbindung steht und die Leiterplatte (60) in der Nut (308) aufgenommen ist.

6. Batteriepack (01) nach Anspruch 5, wobei der Batteriepack (01) ferner einen zweiten Abstandshalter (80) umfasst, wobei der zweite Abstandshalter (80) in der Nut (308) angeordnet ist und der zweite Abstandshalter (80) in einer dritten Richtung zwischen dem ersten Bauteil (30) und der Leiterplatte (60) angeordnet ist, wobei die dritte Richtung senkrecht sowohl zur ersten Richtung als auch zur zweiten Richtung verläuft; wobei der zweite Abstandshalter (80) an der Leiterplatte (60) anliegt und der zweite Abstandshalter (80) an einem Teil des ersten Bauteils (30) anliegt.

7. Batteriepack (01) nach Anspruch 6, wobei ein Material des zweiten Abstandshalters (80) ein isolierender, wärmeleitender Klebstoff ist.

8. Batteriepack (01) nach Anspruch 5, wobei das obere Gehäuse (90) eine Öffnung der Nut (308) abdeckt und das erste Durchgangsloch (301) zwischen dem oberen Gehäuse (90) und dem unteren Gehäuse (10) freiliegt.

9. Batteriepack (01) nach Anspruch 3, wobei der Füllkörper (50) ein verfestigter wärmeleitender Klebstoff auf den oberen Dichtungen der Batteriezellen (201) ist, wobei der Füllkörper (50) mit dem ersten Abstandshalter (40) und dem ersten Bauteil (30) verklebt und daran befestigt ist.

10. Batteriepack (01) nach Anspruch 2, wobei der erste Abstandshalter (40) ein isolierender, wärmeleitender Abstandshalter ist.

11. Batteriepack (01) nach einem der Ansprüche 6 bis 8, wobei das erste Bauteil (30) eine erste Seitenplatte (302), eine zweite Seitenplatte (303), eine dritte Seitenplatte (304), eine vierte Seitenplatte (305) und eine Bodenplatte (306) umfasst; wobei die Nut (308) gemeinsam von der ersten Seitenplatte (302), der zweiten Seitenplatte (303), der dritten Seitenplatte (304), der vierten Seitenplatte (305) und der Bodenplatte (306) umschlossen ist.

12. Batteriepack (01) nach einem der Ansprüche 1 bis 11, wobei das erste Durchgangsloch (301) das erste Bauteil (30) in der ersten Richtung oder der zweiten Richtung durchläuft.

13. Elektrische Vorrichtung, umfassend den Batteriepack (01) nach einem der Ansprüche 1 bis 12.

## Revendications

1. Un bloc-batterie (01), comportant :
une coque supérieure (90) ;
une coque inférieure (10) pourvue d'une cavité batterie (10a) ;
un ensemble de cellules batterie (20) prévu dans la cavité batterie (10a) ;
une circuit imprimé (60) connectée à l'ensemble de cellules batterie (20), et la circuit imprimé (60) est située entre la coque supérieure (90) et la coque inférieure (10) ;
dans lequel
le bloc-batterie (01) comprend en outre un premier composant (30), le premier composant (30) est pourvu d'un premier trou traversant (301) traversant le premier composant (30), le premier trou traversant (301) est situé entre la circuit imprimé (60) et l'ensemble de cellules batterie (20), et le premier trou traversant (301) communique avec l'air extérieur ;
dans lequel l'ensemble de cellules batterie (20) comprend une pluralité de cellules batterie (201) empilées séquentiellement dans une première direction ; chaque cellule batterie (201) comprend un ensemble électrode (2011), une coque de cellule batterie (2012) pour loger l'ensemble électrode (2011), et des pattes (2013) ; une extrémité de chaque patte (2013) connectée à l'ensemble électrode (2011), une autre extrémité de chaque patte (2013) sortant de la coque de cellule batterie (2012), le premier trou traversant (301) étant situé entre la circuit imprimé (60) et les pattes (2013) ;
**caractérisé en ce que** le premier composant (30) possède une pluralité de pièces dentées (3021) s'étendant dans le premier trou traversant (301), la pluralité de pièces dentées (3021) sont disposées dans le premier trou traversant (301) à intervalles dans une deuxième direction, la pluralité de pièces dentées (3021) sépare le premier trou traversant (301) en une pluralité de canaux (301a), et la deuxième direction est perpendiculaire à la première direction.

2. Le bloc-batterie (01) selon la revendication 1, dans lequel le bloc-batterie (01) comprend en outre un premier espaceur (40), le premier espaceur (40) étant disposé entre le premier composant (30) et les pattes (2013) des cellules batterie (201), et le premier espaceur (40) venant en appui contre le premier composant (30) et les pattes (2013) des cellules batterie (201) respectivement.

3. Le bloc-batterie (01) selon la revendication 2, dans lequel le bloc-batterie (01) comprend en outre un élément de remplissage (50), l'élément de remplissage (50) étant disposé sur l'ensemble de cellules batterie (20), et l'élément de remplissage (50) étant connecté au premier composant (30).

4. Le bloc-batterie (01) selon l'une quelconque des revendications 1 à 3, dans lequel le premier composant (30) est en outre pourvu d'un deuxième trou traversant (3061) ; et
la circuit imprimé (60) est disposée sur une surface du premier composant (30), la surface du premier composant (30) étant une surface faisant face à l'opposé de la coque inférieure (10) ;
le bloc-batterie (01) comprend en outre une ligne de connexion (70), une extrémité de la ligne de connexion (70) est connectée aux pattes (2013) de la cellule batterie (201), une autre extrémité de la ligne de connexion (70) passe à travers le deuxième trou traversant (3061) et est connectée à la circuit imprimé (60).

5. Le bloc-batterie (01) selon la revendication 4, dans lequel une rainure (308) est prévue sur le premier composant (30), le deuxième trou traversant (3061) communique avec la rainure (308), et la circuit imprimé (60) est logée dans la rainure (308).

6. Le bloc-batterie (01) selon la revendication 5, dans lequel le bloc-batterie (01) comprend en outre un deuxième espaceur (80), le deuxième espaceur (80) étant disposé dans la rainure (308), et le deuxième espaceur (80) est disposé entre le premier composant (30) et la circuit imprimé (60) dans une troisième direction, la troisième direction étant perpendiculaire à la fois à la première direction et à la deuxième direction ;
le deuxième espaceur (80) vient en appui contre la circuit imprimé (60), et le deuxième espaceur (80) vient en appui contre une partie du premier composant (30).

7. Le bloc-batterie (01) selon la revendication 6, dans lequel un matériau du deuxième espaceur (80) est un adhésif conducteur thermique isolant.

8. Le bloc-batterie (01) selon la revendication 5, dans lequel la coque supérieure (90) recouvre une ouverture de la rainure (308), et le premier trou traversant (301) est exposé entre la coque supérieure (90) et la coque inférieure (10).

9. Le bloc-batterie (01) selon la revendication 3, dans lequel l'élément de remplissage (50) est un adhésif conducteur thermiquement solidifié sur des scellages supérieurs des cellules batterie (201), l'élément de remplissage (50) est collé et fixé au premier espaceur (40) et au premier composant (30).

10. Le bloc-batterie (01) selon la revendication 2, dans lequel le premier espaceur (40) est un espaceur isolant conducteur thermique.

11. Le bloc-batterie (01) selon l'une quelconque des revendications 6 à 8, dans lequel le premier composant (30) comprend une première plaque latérale (302), une deuxième plaque latérale (303), une troisième plaque latérale (304), une quatrième plaque latérale (305) et une plaque de fond (306) ;
la rainure (308) est conjointement fermée par la première plaque latérale (302), la deuxième plaque latérale (303), la troisième plaque latérale (304), la quatrième plaque latérale (305) et la plaque de fond (306).

12. Le bloc-batterie (01) selon l'une quelconque des revendications 1 à 11, dans lequel le premier trou traversant (301) traverse le premier composant (30) dans la première direction ou la deuxième direction.

13. Un dispositif électrique, comportant le bloc-batterie (01) selon l'une quelconque des revendications 1 à 12.
